Europäisches Patentamt

European Patent Office

Office européen des brevets

(19)

(11) Veröffentlichungsnummer: **0 311 093**
**A2**

(12) **EUROPÄISCHE PATENTANMELDUNG**

(21) Anmeldenummer: 88116635.9

(22) Anmeldetag: 07.10.88

(51) Int. Cl.4: **A21D 2/24 , A23L 1/236**

(30) Priorität: 08.10.87 DE 3734055

(43) Veröffentlichungstag der Anmeldung:
12.04.89 Patentblatt 89/15

(84) Benannte Vertragsstaaten:
AT BE CH DE ES FR GB GR IT LI LU NL SE

(71) Anmelder: FIRMA E. OTTO SCHMIDT
Zollhausstrasse 30
D-8500 Nürnberg 50(DE)

(72) Erfinder: Weiner, Rudolf
Zeidlerweg 12
D-8501 Schwanstetten(DE)

(74) Vertreter: Hafner, Dieter, Dr.rer.nat.,
Dipl.-Phys.
Ostendstrasse 132
D-8500 Nürnberg 30(DE)

(54) **Verfahren zum Herstellen kalorienreduzierter Backwaren.**

(57) Um ein Verfahren zum Herstellen von kalorienreduzierter Backware, insbesondere Lebkuchen, Feingebäck, Torten u. dgl., bei welchen die geschmackliche Süßung durch einen Süßstoff erzielt wird, so weiterzubilden, daß die Anwendung des Verfahrens zu einem gesüßten Gebäck führt, das zuckerfrei und ohne wesentliche geschmackliche Nebenwirkungen ist, wird bei dem Verfahren ein i. w. aus Asparaginsäure, Phenylalanin und Methylalkohol bestehendes, thermisch im feuchten Zustand, insbesondere in wässriger Lösung bis ca. 100° C stabilisiertes Dipeptid als Süßungsmittel verwendet; die Dipeptid-Kristalle werden zur Temperaturstabilisierung in ein Schutzkolloid eingehüllt, das Carboxymethylzellulose oder Maltodextrine enthält oder aus diesen besteht.

EP 0 311 093 A2

## Verfahren zum Herstellen kalorienreduzierter Backwaren

Die Erfindung betrifft ein Verfahren zum Herstellen kalorienreduzierter Backwaren, insbesondere Kuchen, Torten, Feingebäck, Lebkuchen, Plätzchen und dergl., bei welchen die geschmackliche Süßung durch einen Süßstoff erzielt wird.

Seit längerer Zeit ist es möglich, Backwaren mit Kalorienreduzierung zu bewerben, wenn diese gegenüber zuckergesüßten Backwaren einen um 30 % reduzierten Kalorienwert aufweisen. Es ist bereits als Stand der Technik bekannt geworden, Süßstoffe in Lebensmitteln zu verwenden, beispielsweise Saccharin und Zyclamat. Diese bekannten Süßstoffe haben allerdings einen nicht zu überdeckenden Nebengeschmack, der die Qualität von Backwaren so stark beeinträchtigt, daß man von diesen Stoffen wieder abgekommen ist.

Seit längerer Zeit ist darüber hinaus der Süßstoff Aspartam bekannt, den man bereits zur Süßung einer Vielzahl von Lebensmitteln heranzieht, die bei der Herstellung nicht oder nicht wesentlich erwärmt werden müssen. Der Einsatz von Aspartam - ein Süßstoff, der im wesentlichen ohne Nebengeschmack süßt und dessen Süßkraft weit stärker als die Süßkraft des Zuckers ist -mußte in Backwaren bislang allerdings scheitern, da Aspartam in Teigmassen, d.h. in wässeriger Lösung, nur bedingt temparaturbeständig ist. Dies liegt an einer die beiden Hauptkomponenten des Aspartam, nämlich Phenylalanin- und Aspartansäure bindenden Methanolbrücke, die durch Einwirkung der bei üblichen Backprozessen vorherrschenden Temperaturen im Bereich von 90 - 100° zerfällt. Dadurch verliert das Aspartam seine Süßkraft und die zu süßende Backware letztlich ihre geschmackliche Note.

Der Erfindung liegt die Aufgabe zugrunde, ein Verfahren zum Herstellen kalorienreduzierter Backwaren anzugeben, dessen Anwendung zu einem gesüßten Gebäck führt, das zuckerfrei und ohne wesentliche geschmackliche Nebenwirkungen ist. Das Verfahren soll insbesondere unter Beibehaltung der üblichen Backtemperaturen zwischen 90 und 100° angewendet werden können. Diese Aufgabe wird dadurch gelöst, daß als Süßungsmittel ein im wesentlichen aus Asparaginsäure, Phenylalanin und Methylalkohol bestehender thermisch im feuchten Zustand, insbesondere in wässriger Lösung, bis ca. 100° C stabilisiertes Dipeptid angewendet wird. Wenn im Patentanspruch 1 davon gesprochen wird, daß das Dipeptid als Süßungsmittel thermisch stabilisiert sein soll, so ist von wesentlicher Bedeutung, daß die Methylalkoholbrücke im feuchten Zustand bei Temperaturen im Bereich über 70° C nicht aufbricht und zerfällt, was zu einer Zerstörung des vorteilhafterweise zu verwendenden Süßstoffes führt. Mit anderen Worten umfaßt die Erfindung zunächst alle Maßnahmen, die zur Stabilisierung von Methanolbrücken in Süßstoffen im Stand der Technik bekannt sind. Insbesondere soll gemäß Anspruch 2 der Süßstoff Aspartam zur Süßung der kalorienreduzierten Backwaren verwendet werden.

Ein besonders vorteilhaftes Verfahren zur Stabilisierung der Süßkraft wird darin gesehen, daß die Dipeptid-Kristalle in ein Schutzkolloid eingebunden werden. Dies läßt sich vorteilhafterweise durch Suspensionen erreichen, die bis mindestens 100° C temperaturbeständig sind, darüber hinaus wasserlöslich sind und eine mit steigender Temperatur ansteigende Viskosität aufweisen. Die Temperaturbeständigkeit der Suspensionen ist notwendig, um die üblichen Backtemperaturen voll durchfahren zu können, die Wasserlöslichkeit ist notwendig, damit die Suspensionen die Süßstoffbestandteile beim Verzehr durch Feuchtigkeitszuführung im Mund wieder freigeben, die ansteigende Viskosität ist zweckdienlich, um einem Zerfall der Aspartam-Moleküle im höheren Temperaturbereich vorzubeugen.

Es hat sich herausgestellt, daß Suspensionen aus Zellulose, insbesondere Carboxymethylzellulose diese Eigenschaften in besonders vorteilhafter Weise in sich vereinigen und darüber hinaus sich in Backwaren gut verarbeiten lassen. Es ist bereits bekannt, Carboxymethylzellulose bereits in Backwaren als Bindemittel zu verwenden. Darin wird jedoch nicht die Erfindung gesehen, die Erfindung liegt vielmehr in einer speziellen Funktion, die die Carboxymethylzellulose in Verbindung mit den Süßstoffkristallen ausüben soll, nämlich diese vor Zerfall im höheren Backtemperaturbereich zu schützen.

Ein ähnlicher Schutzeffekt kann durch Verwendung von Maltodextrin als Trägerstoff erzielt werden. Die physikalischen Gegebenheiten, die sich bei Verwendung von Maltodextrin als Trägerstoff einstellen, sind sehr ähnlich oder nahezu identisch denen, die man bei Verwendung von Carboxymethylzellulose erreicht. Einzelheiten betreffend die Verwendung von Maltodextrin als Schutz-Trägerstoff ergeben sich aus den nachfolgenden Unteransprüchen.

Im Zusammenhang mit der Erfindung ist es weiterhin bedeutungsvoll, daß Aspartam-Kristalle - sofern sie trocken sind - weit höhere Temperaturen als 100° C aushalten. Befinden sich die Aspartam-Kristalle allerdings im feuchten Zustand, so sind sie weit mehr temperaturempfindlich, was darauf zurückgeführt werden kann, daß vorhandene Wasserstoff-Ionen die Methanol-Brückenbindung stark affektieren. Sorgt man nun dafür, daß diese Wasserstoff-Ionen durch eine Umhüllung der Aspartam-Moleküle zumindest teilweise eingebunden werden und dadurch ihre Aggressivität gebremst wird, kann eine Stabilitätserhöhung des Aspartams in einen Temperaturbereich von knapp 100° C hinein verursacht werden, der letztlich zur Verarbeitbarkeit des Aspartam in Backprozessen führt.

Das Mischungsverhältnis zwischen Aspartam und Suspension hängt von der gewünschten Süßung ab und kann sich im Bereich zwischen 0,1 bis 1 Teil Aspartam und 10 Teile gelöste Carboxymethylzellulose bewegen.

Zur Herstellung der Backmischung wird das Süßungsmittel (z. B. das Aspartam) in die Suspension eingerührt und die daraus gebildete Mischung in die vorbereitete Backmischung eingearbeitet, wie dies mit zucker- oder siruphaltigen Süßungsmischungen bereits üblich ist.

Es hat sich als vorteilhaft erwiesen, die Mischung aus CMC und Aspartam auf ca. 90° zu erwärmen, anschließend abzukühlen und in eingedickter pastosen Form zum Einrühren in die Backmischung sodann bereitzustellen.

Um zu vermeiden, daß der süße Geschmack des Aspartam beim Verzehr allzu verzögert auftritt, was durch die zuvor notwendige Auflösung der Methylzellulose eintritt, ist es vorteilhaft, wenn der vorbereiteten, das Aspartam enthaltenden Süßungsmischung Glukose und/oder Fructose zugegeben wird. Die Glukose/Fructose wird zusammen mit der Aspartam-Zellulose-Mischung erwärmt und eingedickt, so daß insgesamt eine Mischung in einem pastosen Zustand entsteht, der dann in die Backmischung eingearbeitet werden kann. Dadurch läßt sich in der fertigen Teigmischung eine sehr homogene Verteilung des Süßungsmittels erreichen, was die Qualität der Backwaren erhöht.

Die Erfindung umfaßt auch kalorienreduzierte Backwaren, insbesondere Lebkuchen, die dadurch gekennzeichnet sind, daß sie den Süßstoff Aspartam enthalten, dessen Kristalle von einer Wärmeschutzschicht überzogen sind. Die Wärmeschutzschicht soll vorteilhafterweise die Oberflächen der Kristalle weitgehendst benetzen, um ein Aufbrechen der temperaturempfindlichen Bestandteile der Süßungsmoleküle zu vermeiden. Die Wärmeschutzschicht ist getrocknete Carboxymethylzellulose, gegebenenfalls enthält diese Schutzschicht noch einen Bestandteil an Glukose, um bereits sehr schnell einen Süßegeschmack der Backware herbeizuführen.

Wenn die Wärmeschutzschicht aus Maltodextrin gebildet wird, ist es nicht erforderlich, Glukose und/oder Fructose miteinzuarbeiten.

Dabei nutzt man in besonders vorteihafter Weise die Tatsache aus, daß durch die Verwendung von Maltodextrin im Mundraum beim Verzehr bereits ein Vorsüßungseffekt erzielt wird, der vor dem Inkrafttreten des Süßungseffektes des Aspartams eintritt. Dies ist bei Verwendung von Carboxymethylzellulose nicht der Fall, so daß bei Verwendung von Carboxymethylzellulose durch Zugabe von Fructose und/oder Glukose ein Vorsüßungseffekt eingestellt werden muß.

Nachfolgend sind einige erfindungsgemäße Verfahrensrezepturen zur Erstellung von backstabilen Pasten mit Aspartam, einmal unter Verwendung von Methylzellulose und einmal unter Verwendung von Maltodextrin als Trägerstoff angegeben. Diese Rezepturen sind beispielhafte Rezepturen und können im Rahmen des dem Durchschnittsfachmann zur Verfügung stehenden Wisssens abgeändert werden. Daneben finden sich analytische Daten des Glukosesirup, der bei Verwendung von Carboxymethylzellulose zugegeben werden muß, sowie analytische Daten der Maltodextrine, die in besonders vorteilhafter Weise verwendet werden kann.

Um zu dokumentieren, wie die Kalorienreduzierung bei Backwaren erreicht wird, sind abschließend einige erfindungsgemäße Backwarenrezepturen sowie zugehörige Kilokalorienwerte je 100 Gramm aufgeführt, denen die Rezepturen entsprechender nichtkalorienreduzierter Backwaren im Stand der Technik gegenübergestellt sind. Für die beispielhaft angegebenen Rezepturen ist bedeutungsvoll, daß die Prozentangaben untereinander variiert werden können, ohne die Erfindung zu verlassen, bekanntlich können Backwaren je nach Geschmack mehr oder weniger gesüßt werden.

| ERSTELLUNG EINER BACKSTABILEN PASTE MIT ASPARTAM | |
|---|---|
| Trägerstoffe:<br>Grundrezept: | Methylcellulose (MC) und getrockneten Glucosesirup.<br>60 Teile Wasser<br>36 Teile getrockneten Glucosesirup<br>6 Teile Aspartam<br>1 Teil MC |
| Erforderliche<br>Geräte: | Rührmaschine mit doppelwandigem Kessel, der beheizt und gekühlt werden kann sowie eine Vakuumpumpe.<br>Drehzahl regelbar bis 3 000 UpM |
| Verfahrensschritte: | |
| Schritt 1: | 1 Teil MC in 60 Teile Wasser (ca. 12° C) einrühren und 30 min. stehen lassen. |
| Schritt 2: | 36 Teile getrockneter Glucosesirup mit 6 Teilen Aspartam vermischen. |
| Schritt 3: | Wasser-MC-Mischung und Aspartam - Glucosesirupmischung in laufende Rührmaschine geben. Kessel der Rührmaschine auf 90° C aufheizen.<br>Laufzeit: ca. 1 min. bei 500 UpM. |
| Schritt 4: | Homogenisieren<br>Rührmaschine stufenweise abkühlen bei steigenter Drehzahl 750, 1 000, 3 000 UpM und laufendem Vakuum.<br>Laufzeit: ca. 15 min.<br>Anschließend bei abgeschaltetem Rührwerk noch 5 min. Vakuum saugen.<br>Endtemperatur 35° C.<br>Trockensubstanz der fertigen Paste 68 Brix. Sensorische Prüfung ergab keine Reaktion von Aspartamspaltung. |

| ANALYTISCHE DATEN DES GETROCKNETEN GIUKOSESIRUP | | |
|---|---|---|
| Feuchtigkeit | (max. %) | 6,0 |
| Asche | (max. %) | 0,3 |
| Eiweißgehalt (N x 6,25) | (max. %) | 0,15 |
| pH in der Lösung | | 4,8 - 5,2 |
| D.E. Wert | | 60 - 64 |
| Kohlenhydratezusammensetzung | (Richtwerte) | |
| Glukose | (%) | 30-32 |
| Maltose | (%) | 34-36 |
| Oligo- und Polysaccharide | (%) | 36-32 |
| Schüttgewicht unverdichtet | (kg/l) | 0,63 + 0,05 |
| Korngröße (Alpine-Sieb) | | - |
| Part. über 125 Mikron | | max. 20% |
| Part. über 80 Mikron | | max. 50% |

| ERSTELLUNG EINER BACKSTABILEN PASTE MIT ASPARTAM | |
|---|---|
| Trägerstoff: Grundrezept: | Maltodextrine<br>10 Teile Wasser<br>10 Teile Maltodextrine<br>10 Teile Aspartam |
| Erforderliche Geräte: | Rührmaschine mit doppelwandigem Kessel, der beheizt und gekühlt werden kann, sowie mit einer Vakuumpumpe ausgestattet ist.<br>Drehzahl regelbar bis 3 000 UpM. |
| Verfahrensschritte: | |
| Schritt 1:<br><br>Schritt 2: | 10 Teile Maltodextrine in 10 Teile kaltem Wasser einrühren und auf 90° C erhitzen. Laufzeit ca. 1 min. bei 1 500 UpM.<br>Masse abkühlen lassen auf 70° C, dann Aspartam dazu geben. Die Masse wird unter Abkühlung bei laufender Vakuumpumpe homogenisiert.<br>Drehzahl 1 500 UpM<br>Laufzeit ca. 90 sek.<br>Das Produkt zeigt eine ähnliche Struktur wie Fondant 100 g der Paste entsprechen ca. 2 000 g Saccharose. |
| Backversuch: | |
| Grundteig: | 30 g Mehl 812<br>10 g Fett<br>10 g Wasser<br>0,5 g Backpulver<br>1.5 g Aspartam Paste<br>0,2 g Salz<br>Backraumtemperatur: 210° C<br>Backzeit: 10 min.<br>Kerntemperatur im Gebäck:100° C<br>Größe der Gebäckstücke: ø 40 mm<br>Gebäckstärke: 4 mm |

| ANALYTISCHE DATEN DER MALTODEXTRINE | | |
|---|---|---|
| Feuchtigkeit<br>Asche<br>Eiweissgehalt (N x 6,25) | ( % max.)<br>( " )<br>( " ) | 5,0<br>0,3<br>0,15 |
| pH in der Lösung | | 4,8 - 5,2 |
| D.E.-Wert | | 5 - 8 |
| Kohlenhydrate-Zusammensetzung | (Richtwerte) | |
| Glucose<br>Maltose<br>Oligo- und Polysaccharide<br>Schüttgewicht unverdichtet<br>Korngröße (Alpinesieb) | (%)<br>(%)<br>(%)<br>(kg/l) | max. 0,5<br>0,5 - 1,0<br>98,5 - 99,5<br>0,40 + 0,05<br>- |
| Part. über 125 Mikron | | max. 20% |
| Part. über 80 Mikron | | max. 50% |

5

| Feine Oblaten-Lebkuchen | | | |
|---|---|---|---|
| Normal-Rezeptur | | Aspartam-Rezeptur | |
| Invertsirup | 6,0 % | Invertsirup | 4,0 % |
| Fruchtfüllung | 8,0 % | Fruchtmark | 7,0 % |
| Lecithin | 0,3 % | Lecithin | 0,3 % |
| Honig | 1,5 % | Honig | 2,0 % |
| Wasser | 6,0 % | Wasser | 8,0 % |
| Orangeat | 14,0 % | Orangeat | 12,0 % |
| Zucker | 16,0 % | Haselnüsse | 13,0 % |
| Haselnüsse | 16,0 % | Volleipulver | 1,0 % |
| Volleipulver | 1,0 % | Stärke | 4,0 % |
| Stärke | 4,0 % | Gewürze | 1,0 % |
| Gewürze | 1,0 % | Milcheiweiß | 2,0 % |
| Milcheiweiß | 2,0 % | Backtriebmittel | 0,2 % |
| Weizenmehl | 24,0 % | Weizenmehl | 20,0 % |
| Backtriebmittel | 0,2 % | Kleie | 18,5 % |
| | | Aspartampaste | 5,0 % |
| | | Pektin | 2,0 % |
| je 100 gr. 355 Kcal / 1476 Kjoul | | 100 gr. 247 Kcal. / 1027 Kjoul | |

| Vollkorn-Leinsamen-Mürbgebäck | | | |
|---|---|---|---|
| Normal-Rezeptur | | Aspartam-Rezeptur | |
| Pflanzenmargarine | 25,0 % | Fettemulision | 19,0 % |
| Zucker | 20,0 % | Volleipulver | 1,5 % |
| Weizenvollkornmehl | 30,0 % | Zitronat | 4,0 % |
| Zitronat | 9,0 % | Aromastoffe | 0,5 % |
| Leinsamen | 6,0 % | Zucker | 7,0 % |
| Weizenkeime | 3,0 % | Weizenvollkornmehl | 30,0 % |
| Volleipulver | 2,5 % | Backtriebmittel | 0,3 % |
| Wasser | 2,0 % | Speisesalz | 0,2 % |
| Milcheiweiß | 1,5 % | Wasser | 7,0 % |
| Aromastoffe | 0,5 % | Milcheiweiß | 1,5 % |
| Speisesalz | 0,3 % | Weizenkeime | 2,0 % |
| Backtriebmittel | 0,2 % | Leinsame | 6,0 % |
| | | Aspartampaste | 11,0 % |
| | | Lecithin | 1,0 % |
| | | Kleie | 9,0 % |
| je 100 gr. 472 Kcal / 1963 Kjoul | | je 100 gr. 230 Kcal / 957 Kjoul | |

| Müsli-Happen | | | |
|---|---|---|---|
| Normal-Rezeptur | | Aspartam-Rezeptur | |
| Pflanzenmargarine | 8,0 % | Kondensmilch | 8,0 % |
| Kondensmilch | 5,0 % | Müslimischung | 13,0 % |
| Aromastoffe | 0,7 % | Kleie | 17,0 % |
| Kokosflocken | 12,0 % | Zucker | 6,0 % |
| Marzipan | 6,0 % | Backtriebmittel | 0,5 % |
| Kleie | 5,0 % | Wasser | 14,0 % |
| Weizenkleie | 4,0 % | Lecithin | 0,5 % |
| Müslimischung | 18,0 % | Haselnüsse | 5,0 % |
| Zucker | 21,0 % | Sultaninen | 10,0 % |
| Kuvertüre | 20,0 % | Aromastoffe | 1,0 % |
| Backtriebmittel | 0,3 % | Pektrin | 2,0 % |
| | | Aspartampaste | 6,0 % |
| | | Fettemulsion | 7,0 % |
| | | Kokosflocken | 10,0 % |
| je 100 gr. 479 Kcal / 1992 Kjoul | | je 100 gr. 258 Kcal / 1073 Kjoul | |

| Kokosriegel | | | |
|---|---|---|---|
| Normal-Rezeptur | | Aspartam-Rezeptur | |
| Pflanzenmargarine | 5,0 % | Glucesirup | 5,0 % |
| Glucsesirup | 6,0 % | Kondensmilch | 5,0 % |
| Kondensmilch | 5,0 % | Aromastoffe | 0,5 % |
| Aromastoffe | 0,7 % | Kokosflocken | 13,5 % |
| Kokosflocken | 18,0 % | Kleie | 20,0 % |
| Kuvertüre | 16,0 % | Haselnüsse | 5,0 % |
| Kleie | 4,0 % | Wasser | 11,0 % |
| Marzipan | 20,0 % | Marzipan | 9,0 % |
| Zucker | 20,0 % | Sultaninen | 12,0 % |
| Haselnüsse | 5,0 % | Fettemulsion | 7,0 % |
| Speisesalz | 0,3 % | Pektrin | 6,0 % |
| | | Aspartampaste | 6,0 % |
| je 100 gr. 514 Kcal / 2138 Kjoul | | je 100 ge. 298 Kcal / 1239 Kjoul | |

**Ansprüche**

1. Verfahren zum Herstellen kalorienreduzierter Backwaren, inbesondere Lebkuchen, Feingebäck, Torten, Kuchen und dgl., bei welchen die geschmackliche Süßung durch einen Süßstoff erzielt wird, gekennzeichnet durch
die Verwendung eines im wesentlichen aus Asparaginsäure, Phenylalanin und Methylalkohol bestehenden, thermisch im feuchten Zustand, insbesondere in wässeriger Lösung, bis ca. 100° C stabilisierten Dipeptides als Süßungsmittel.

2. Verfahren nach Anspruch 1, gekennzeichnet durch
die Verwendung von Aspartam in temperaturstabilisierter Form.

3. Verfahren nach einem der vorhergehenden Ansprüche 1 -2,
gekennzeichnet durch
eine Temperaturstabilisierung der in den Aspartam-Molekülen vorhandenen Methanolbrücken.

4. Verfahren nach Ansprüchen 1 - 3,
gekennzeichnet durch
die Einhüllung der Dipeptid-Kristalle in ein Schutzkolloid.

5. Verfahren nach einem der vorhergehenden Ansprüche,
dadurch gekennzeichnet,
daß die Temperaturstabilisierung durch eine Suspension vorgenommen wird, die
- bis mindestens 100° C temperaturbeständig ist,
- wasserlöslich ist und
- eine mit steigender Temperatur ansteigende Viskosität aufweist.

6. Verfahren nach einem der vorhergehenden Ansprüche,
dadurch gekennzeichnet,
daß die Suspension Zellulose enthält oder aus solcher besteht.

7. Verfahren nach einem der vorhergehenden Ansprüche,
dadurch gekennzeichnet,
daß die Suspension aus Methylzellulose, insbesondere Carboxymethylzellulose besteht oder solche enthält.

8. Verfahren nach einem der vorhergehenden Ansprüche 1 - 5,
dadurch gekennzeichnet,
daß die Suspension ein Stärkeabbauprodukt enthält oder aus einem solchen besteht.

9. Verfahren nach Anspruch 8,
dadurch gekennzeichnet,
daß das Stärkeabbauprodukt Maltodextrin ist oder solches enthält.

10. Verfahren nach einem der vorhergehenden Ansprüche,
dadurch gekennzeichnet,
daß das Süßungsmittel in die Suspension eingerührt wird und die daraus gebildete Mischung in die vorbereitete Backmischung als Süßung verursachende Komponente eingerührt wird.

11. Verfahren nach Anspruch 10,
gekennzeichnet durch
die Erwärmung der gebildeten Mischung auf ca. 90° und anschließende Abkühlung vor dem Einrühren in die Backmischung.

12. Verfahren nach einem der vorhergehenden Ansprüche 10 - 11,
dadurch gekennzeichnet,
daß der Aspartam-Zellulose-Mischung Glukose und/oder Fructose zugesetzt wird.

13. Verfahren nach Anspruch 12,
dadurch gekennzeichnet,
daß die Glukose und/oder Fructose enthaltende Mischung vor Einarbeitung in die vorbereitete Backmischung in einen pastosen Zustand eingedickt wird.

14. Kalorienreduzierte Backwaren, insbesondere Lebkuchen, die aus einer einen Süßstoff enthaltenden Teigmischung hergestellt wird,
dadurch gekennzeichnet,
daß der Süßstoff Aspartam ist, dessen Kristalle von einer Wärmeschutzschicht überzogen sind.

15. Backwaren nach Anspruch 14,
dadurch gekennzeichnet,
daß die Wärmeschutzschicht getrocknete Methylzellulose, insbesondere Carboxymethylzellulose (CMC) ist.

16. Backware nach Anspruch 14 oder 15,
dadurch gekennzeichnet,
daß sie in der die Aspartam-Kristalle umgebenden Wärmeschutzschicht Glukose und/oder Fructose enthält.

17. Backware nach Anspruch 14,
dadurch gekennzeichnet,
daß die Wärmeschutzschicht Maltodextrin enthält oder aus Maltodextrin besteht.

18. Süßungspaste (Aspartampaste) zur Einarbeitung in kalorienreduzierte Backwaren,
dadurch gekennzeichnet,
daß sie aus ca. 5 - 15, insbesondere 7 Gewichtsprozent Aspartam und 95 - 85, insbesondere 93 Gewichtsprozent Methylzellulosesupension, insbesondere Carboxymethylzellulosesuspension besteht.

19. Süßungspaste (Aspartampaste) zur Einarbeitung in kalorienreduzierte Backwaren,
dadurch gekennzeichnet,
daß sie aus 20 - 40, insbesondere 30 - 35 Gewichtsprozent Aspartam, 20 - 40, insbesondere 30 - 35 Gewichtsprozent Maltodextrin besteht sowie einen Wasseranteil enthält, der die Summe der Aspartam- und Maltodextrin-Gewichtsanteile zu 100 Gewichtsprozent ergänzt.

20. Kalorienreduziertes Oblaten-Lebkuchengebäck,
dadurch gekennzeichnet,
die Verwendung von ca. 0,25 - 1,5 Gewichtsprozent Aspartam.

21. Kalorienreduzierter Oblaten-Lebkuchen nach Anspruch 20,
dadurch gekennzeichnet,
die Verwendung von ca. 5 Gewichtsprozent Aspartam-Paste.

22. Kalorienreduziertes Müsli-Gebäck, insbesondere Müsli-Happen,
dadurch gekennzeichnet,
die Verwendung von 6 Gewichtsprozent Aspartam-Paste.

23. Kalorienreduziertes Kokos-Gebäck, insbesondere Kokos-Riegel,
gekennzeichnet durch,
die Verwendung von ca. 0,4 - 1,5 Gewichtsprozent Aspartam.

24. Kokos-Gebäck nach Anspruch 23,
gekennzeichnet durch ,
die Verwendung von ca. 6 Gewichtsprozent Aspartam-Paste.

25. Kalorienreduziertes Vollkorn-Leinsamen-Mürbgebäck,
gekennzeichnet durch,
die Verwendung von 0,8 - 1,5 Gewichtsprozent Aspartam.

26. Vollkorn-Leinsamen-Mürbgebäck nach dem vorhergehenden Anspruch,
gekennzeichnet durch,
die Verwendung von ca. 11 Gewichtsprozent Aspartam-Paste.